# EUROPÄISCHE PATENTSCHRIFT

(11) **EP 1 299 658 B1**
(45) Veröffentlichungstag und Bekanntmachung des Hinweises auf die Patenterteilung: **29.06.2005**
(21) Anmeldenummer: 02740255.1
(22) Anmeldetag: 12.04.2002
(51) Int. Cl.: F16F 1/393, F16F 1/38

(54) **BUCHSE, INSBESONDERE LENKERBUCHSE**
SLEEVE, PARTICULARLY A ROD SLEEVE
DOUILLE, NOTAMMENT DOUILLE DE DIRECTION

(30) Priorität: 26.04.2001 DE 10120557
(43) Veröffentlichungstag der Anmeldung: 09.04.2003
(73) Patentinhaber: Phoenix AG, 21079 Hamburg (DE)
(72) Erfinder: GROTH, Michael, 21077 Hamburg (DE); MEYER, Rüdiger, 21385 Amelinghausen (DE)
(86) Internationale Anmeldenummer: PCT/DE2002/001371
(87) Internationale Veröffentlichungsnummer: WO 2002/088567

(56) Entgegenhaltungen:
- EP-A- 0 995 928
- EP-A- 1 132 642
- DE-A- 4 033 805
- GB-A- 2 033 533
- US-A- 6 007 058

## Beschreibung

Die Erfindung betrifft eine Buchse, insbesondere Lenkerbuchse, bestehend wenigstens aus:
- einem Kern aus Metall oder Kunststoff (z.B. auf Basis von Polyphenylenether), umfassend eine Kernnabe, die zwei Stirnseiten mit einem ersten und zweiten Durchmesser aufweist, und einen in Richtung Längsachse verlaufenden Kernbolzen, der unter Bildung zweier Anschlusszapfen über die beiden Stirnseiten der Kernnabe hinausragt;
- einer Außenhülse, die ebenfalls aus Metall oder Kunststoff besteht; sowie
- einer elastischen Schicht, die zwischen der Kernnabe und der Außenhülse angeordnet ist.

Buchsen dieser Art, wobei insbesondere auf die Druckschriften DE 30 04 194 A1, DE 42 08 448 C2 und DE 199 13 777 C1 verwiesen wird, werden vorwiegend in der Schienenfahrzeugtechnik eingesetzt, die nun im Folgenden näher beschrieben wird.

Ein wesentlicher Gesichtspunkt ist die Führung des Radsatzes eines Schienenfahrzeuges mittels eines elastischen, spielfreien Gelenkes linear in den drei Raumrichtungen und torsional bzw. kardanisch um den Drehpunkt eines Führungsarmes, welcher mittels eines Führungselementes (Lenkerbuchse) am Rahmen des Schienenfahrzeuges befestigt ist. Die Fahrzeuglängs- und hochachse liegen hierbei in Radialrichtung des Führungselementes, die Fahrzeugquerachse in dessen Axialrichtung.

Im Hintergrund dieser Technologie sind folgende Anforderungen zu erfüllen:
a) Eine wesentliche Forderung besteht in der hohen Steifigkeit in Radial- und Axialrichtung. Das geforderte Verhältnis von Radial- zu Axialsteifigkeit liegt bei etwa 1 : 1 bis 3 : 1. Gleichzeitig ist eine niedrige Torsionssteifigkeit bei hoher Kardaniksteifigkeit erwünscht. Das Verhältnis von kardanischer zu torsionaler Steifigkeit soll üblicherweise bei etwa 10 : 1 liegen.
   Das Verhältnis der Radial- zur Axialsteifigkeit ist im Falle einer herkömmlichen zylindrischen Elastomerbuchse mit etwa 5 : 1 bis 10 : 1 jedoch zu hoch.
   Im Falle eines sphärischen Elastomer-Kugelgelenkes liegt das Verhältnis der kardanischen zur torsionalen Steifigkeit mit etwa 3 : 1 bis 5 : 1 zu niedrig.
   Die oben genannten Forderungen können somit durch keines der beiden herkömmlichen Konstruktionsprinzipien gleichzeitig erfüllt werden.
b) Eine weitere Forderung besteht darin, dass bei Bedarf ein mechanischer Festanschlag, welcher in radialer Richtung wirkt, in das Bauteil integriert werden kann.
   Auch diese Forderung kann keine der beiden unter (a) erwähnten Bauarten für sich allein erfüllen.

Die Aufgabe der Erfindung besteht nun darin, eine Buchse, insbesondere Lenkerbuchse, bereitzustellen, die den gesamten Anforderungskomplex (a, b) erfüllt.

Gelöst wird diese Aufgabe gemäß Kennzeichen des Patentanspruches 1 dadurch, dass
- die Kernnabe und der Kernbolzen einen einstückigen Kernverbund bilden, der jedoch in Bezug auf die Senkrechte zur Längsachse zweiteilig ausgebildet ist, wobei die beiden Kernhälften mittels eines Steck-Nuten-Systems im Pressverbund zusammengefügt sind;
- die Kernnabe zwischen ihren beiden Stirnseiten bei einer Winkeländerung eine Verjüngung erfährt, und zwar unter Bildung eines dritten Durchmesser, wobei die jeweiligen Kontaktflächen der Kernnabe und der Außenhülse zur elastischen Schicht im Wesentlichen korrespondierend verlaufen; sowie
- die Außenhülse und die elastische Schicht in Bezug auf die Senkrechte zur Längsachse zweiteilig ausgebildet sind, wobei die beiden Hülsenhälften mittels eines Steck-Nuten-Systems im Pressverbund zusammengefügt sind, während die beiden elastischen Schichthälften in einem Abstand zueinander angeordnet sind.

Nach einer weiteren Variante zeichnet sich die Buchse gemäß Kennzeichen des unabhängigen Patentanspruches 2 bei ansonsten gleichen baulichen Merkmalen nach Patentanspruch 1 dadurch aus, dass die Kernnabe und der Kernbolzen separate Bauteile sind, wobei die Kernnabe in Bezug auf die Senkrechte zur Längsachse zweiteilig ausgebildet ist, während der Kernbolzen durchgehend ungeteilt verläuft, wobei die beiden Nabenhälften innerhalb der gemeinsamen Naben-Bolzen-Kontaktzone einen Pressverbund mit dem Kernbolzen bilden.

Zweckmäßige Ausgestaltungen der Erfindung sind in den Patentansprüchen 3 bis 17 genannt.

Die Erfindung wird nun anhand von Ausführungsbeispielen unter Bezugnahme auf schematische Zeichnungen erläutert. Es zeigen:
- Fig. 1: eine Buchse, bei der die Kernnabe und der Kernbolzen einen einstückigen Kernverbund bilden;
- Fig. 2: eine Buchse, bei der die Kernnabe und der Kernbolzen separate Bauteile sind, wobei die beiden Nabenhälften aneinander stoßen;
- Fig. 3: eine Buchse, bei der die Kernnabe und der Kernbolzen separate Bauteile sind, wobei die beiden Nabenhälften in einem Abstand zueinander angeordnet sind.

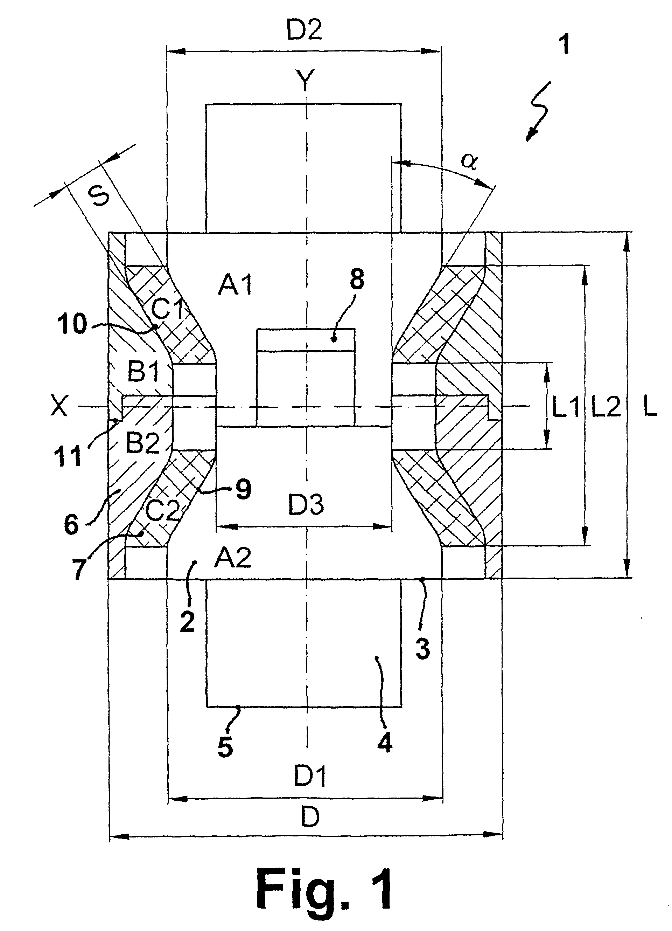

Fig. 1 zeigt eine Buchse **1**, umfassend eine Kernnabe **2**, die zwei Stirnseiten **3** mit einem ersten und zweiten Durchmesser D1 bzw. D2 aufweist, und einen in Richtung Längsachse Y verlaufenden Kernbolzen **4**, der unter Bildung zweier Anschlusszapfen **5** über die beiden Stirnseiten der Kernnabe hinausragt. Die Kernnabe und der Kernbolzen haben eine im Wesentlichen kreisförmige Querschnittsfläche.

Die Kernnabe **2** und der Kernbolzen **4** bilden einen einstückigen Kernverbund, der jedoch in Bezug auf die Senkrechte X zur Längsachse Y zweiteilig ausgebildet ist, wobei die beiden Kernhälften A1 und A2 mittels eines Steck-Nuten-Systems **8** im Pressverbund zusammengefügt sind.

Die Kernnabe **2** erfährt zwischen ihren beiden Stirnseiten **3** bei einer Winkeländerung α eine Verjüngung, und zwar unter Bildung eines dritten Durchmessers D3, wobei die jeweiligen Kontaktflächen **9** und **10** der Kernnabe und der Außenhülse **6** zur elastischen Schicht **7** im Wesentlichen korrespondierend verlaufen.

Die Außenhülse **6** mit der Gesamtlänge L und dem Außendurchmesser D sowie die elastische Schicht **7** mit der Gesamtlänge L2 sind in Bezug auf die Senkrechte X zur Längsachse Y zweiteilig ausgebildet, wobei die beiden Hülsenhälften B1 und B2 mittels eines Steck-Nuten-Systems **11** im Pressverbund zusammengefügt sind, während die beiden elastischen Schichthälften C1 und C2 in einem Abstand L1 zueinander angeordnet sind.

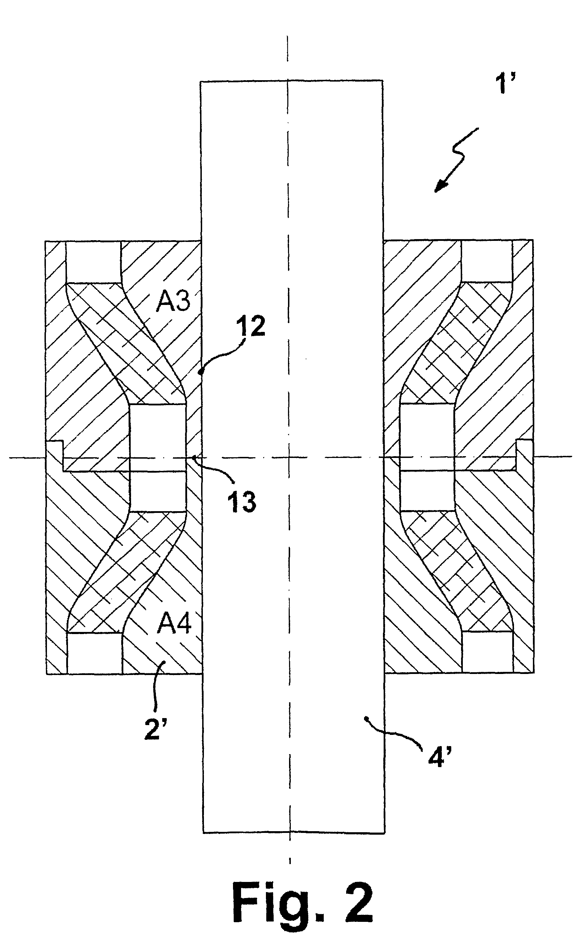

Die elastische Schicht **7** ist zumeist umlaufend ausgebildet, gegebenenfalls in Verbindung mit Nieren (DE 199 31 079 A1, Fig. 4a). Jedoch kann auch eine elastische Schicht verwendet werden, die mit trennenden Kammern versehen ist (DE 42 08 448 C1, Fig. 2). Die elastische Schicht besteht aus einem elastischen Werkstoff, insbesondere auf Basis Naturkautschuk (NR), oder einem thermoplastischen Elastomeren (TPE). Auch eine Ausbildung als Schichtfeder (DE 199 13 777 C1) ist möglich. Die Stärke S der elastischen Schicht **7**, die im Wesentlichen konstant ist, beträgt 2 mm bis 30 mm, vorzugsweise 10 mm bis 20 mm, und zwar bezogen auf den unbelasteten Zustand. Der Abstand L1 zwischen den beiden elastischen Schichthälften C1 und C2 umfasst etwa den gesamten mittigen Nabenbereich mit dem dritten Durchmesser D3. Femer ist die Gesamtlänge L2 der elastischen Schicht **7** unter Einbezug des Abstandes L1 zwischen den beiden Schichthälften C1 und C2 kleiner als die Gesamtlänge L der Außenhülse **6**.

Zweckmäßigerweise gelten bei der Buchse **1** hinsichtlich D, D1, D2, D3, L, L1 und α folgende Wertebereiche:
L : D = 1 : 2 bis 2 : 1, vorzugsweise 1,5 : 1
D1 bzw. D2 : D3 = 3 : 1 bis 1,5 : 1, vorzugsweise 2,5 : 1 bis 2 : 1
L : L1 = 3 : 1 bis 10 : 1, vorzugsweise 5 : 1 bis 10 : 1
α = 2° bis 80°, vorzugsweise 30° bis 60° (Bezugspunkt: Längsachse Y)

Fig. 2 zeigt eine Buchse **1'**, bei der die Kernnabe **2'** und der Kernbolzen **4'** separate Bauteile sind, wobei die Kernnabe zweiteilig ausgebildet ist, während der Kernbolzen durchgehend verläuft, wobei die beiden Nabenhälften A3 und A4 innerhalb der gemeinsamen Naben-Bolzen-Kontaktzone **12** einen Pressverbund mit dem Kernbolzen bilden. Ferner stoßen hier die beiden Nabenhälften A3 und A4 aneinander (Stoßzone **13**).

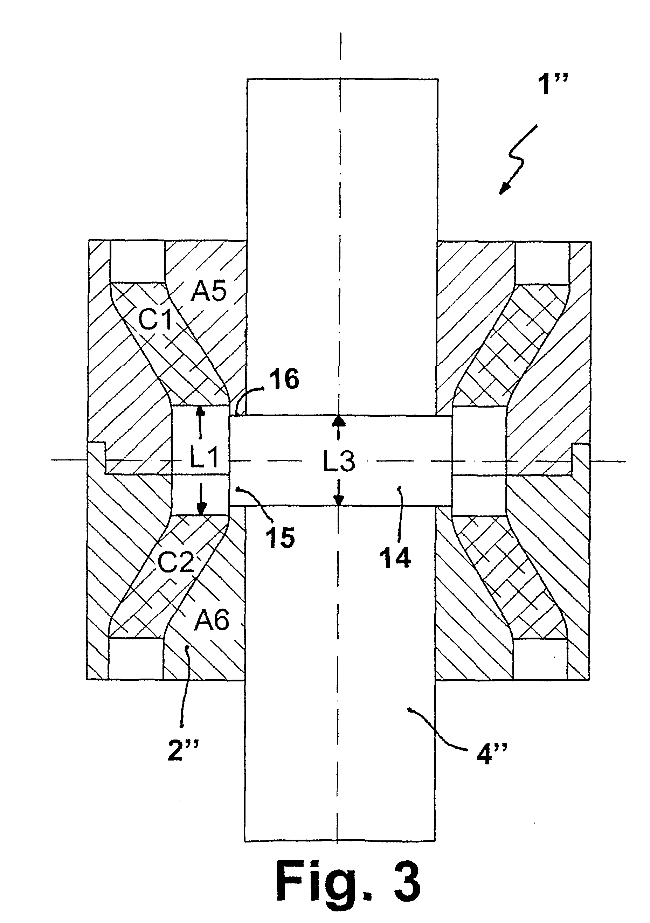

Die Buchse **1"** nach Fig. 3 unterscheidet sich gegenüber dem Ausführungsbeispiel gemäß Fig. 2 lediglich dadurch, dass die beiden Nabenhälften A5 und A6 der Kernnabe **2"** in einem Abstand L3 zueinander angeordnet sind, der kleiner ist als der Abstand L1 zwischen den beiden elastischen Schichthälften C1 und C2. Der durchgehend verlaufende Kernbolzen **4"** ist innerhalb seine mittigen Bereiches verdickt, wobei der Überstand **15** der Bolzenverdickung **14** gleichzeitig der Anschlag **16** für die beiden Nabenhälften A5 und A6 ist.

Was die weiteren konstruktiven Details der Buchsen **1'** und **1"** betrifft, so wird auf das Ausführungsbeispiel gemäß Fig. 1 verwiesen.

### Bezugszeichenliste

- **1, 1', 1"**: Buchse (Lenkerbuchse)
- **2, 2', 2"**: Kernnabe
- **3**: Stirnseiten der Kernnabe
- **4, 4', 4"**: Kernbolzen
- **5**: Anschlusszapfen
- **6**: Hülse
- **7**: elastische Schicht
- **8**: Steck-Nuten-System des Kerns
- **9**: Kontaktfläche der Kernnabe zur elastischen Schicht
- **10**: Kontaktfläche der Außenhülse zur elastischen Schicht
- **11**: Steck-Nuten-System der Außenhülse
- **12**: Naben-Bolzen-Kontaktzone
- **13**: Stoßzone
- **14**: Bolzenverdickung
- **15**: Überstand
- **16**: Anschlag
- A1, A2: Kernhälften
- A3, A4: Nabenhälften
- A5, A6: Nabenhälften
- B1, B2: Hülsenhälften
- C1, C2: Schichthälften
- D: Durchmesser der Außenhülse
- D1: erster Durchmesser
- D2: zweiter Durchmesser
- D3: dritter Durchmesser
- L: Gesamtlänge der Außenhülse
- L1: Abstand zwischen zwei Schichthälften
- L2: Gesamtlänge der elastischen Schicht
- L3: Abstand zwischen zwei Nabenhälften
- S: Stärke (Dicke) der elastischen Schicht
- X: Senkrechte zur Längsachse
- Y: Längsachse
- α: Winkel im Bereich der Nabenverjüngung

## Patentansprüche

1. Buchse (1), insbesondere Lenkerbuchse, bestehend wenigstens aus:
- einem Kern aus Metall oder Kunststoff, umfassend eine Kernnabe (2), die zwei Stirnseiten (3) mit einem ersten und zweiten Durchmesser D1 bzw. D2 aufweist, und einen in Richtung Längsachse Y verlaufenden Kernbolzen (4), der unter Bildung zweier Anschlusszapfen (5) über die beiden Stirnseiten der Kernnabe hinausragt;
- einer Außenhülse (6), die ebenfalls aus Metall oder Kunststoff besteht; sowie
- einer elastischen Schicht (7), die zwischen der Kernnabe (2) und der Außenhülse (6) angeordnet ist;
**dadurch gekennzeichnet, dass**
- die Kernnabe (2) und der Kernbolzen (4) einen einstückigen Kernverbund bilden, der jedoch in Bezug auf die Senkrechte X zur Längsachse Y zweiteilig ausgebildet ist, wobei die beiden Kernhälften (A1, A2) mittels eines Steck-Nuten-Systems (8) im Pressverbund zusammengefügt sind;
- die Kernnabe (2) zwischen ihren beiden Stirnseiten (3) bei einer Winkeländerung α eine Verjüngung erfährt, und zwar unter Bildung eines dritten Durchmesser D3, wobei die jeweiligen Kontaktflächen (9, 10) der Kernnabe und der Außenhülse (6) zur elastischen Schicht (7) im Wesentlichen korrespondierend verlaufen; sowie
- die Außenhülse (6) und die elastische Schicht (7) in Bezug auf die Senkrechte X zur Längsachse Y zweiteilig ausgebildet sind, wobei die beiden Hülsenhälften (B1, B2) mittels eines Steck-Nuten-Systems (11) im Pressverbund zusammengefügt sind, während die beiden elastischen Schichthälften (C1, C2) in einem Abstand L1 zueinander angeordnet sind.

2. Buchse (1', 1"), insbesondere Lenkerbuchse, bestehend wenigstens aus:
- einem Kern aus Metall oder Kunststoff, umfassend eine Kernnabe (2', 2"), die zwei Stirnseiten (3) mit einem ersten und zweiten Durchmesser D1 bzw. D2 aufweist, und einen in Richtung Längsachse Y verlaufenden Kernbolzen (4', 4"), der unter Bildung zweier Anschlusszapfen (5) über die beiden Stirnseiten der Kernnabe hinausragt;
- einer Außenhülse (6), die ebenfalls aus Metall oder Kunststoff besteht; sowie
- einer elastischen Schicht (7), die zwischen der Kernnabe (2', 2") und der Außenhülse (6) angeordnet ist;
**dadurch gekennzeichnet, dass**
- die Kernnabe (2', 2") und der Kernbolzen (4', 4") separate Bauteile sind, wobei die Kernnabe in Bezug auf die Senkrechte X zur Längsachse Y zweiteilig ausgebildet ist, während der Kernbolzen durchgehend ungeteilt verläuft, wobei die beiden Nabenhälften (A3, A4; A5, A6) innerhalb der gemeinsamen Naben-Bolzen-Kontaktzone (12) einen Pressverbund mit dem Kernbolzen bilden;
- die Kernnabe (2', 2") zwischen ihren beiden Stirnseiten (3) bei einer Winkeländerung α eine Verjüngung erfährt, und zwar unter Bildung eines dritten Durchmesser D3, wobei die jeweiligen Kontaktflächen (9, 10) der Kernnabe und der Außenhülse (6) zur elastischen Schicht (7) im Wesentlichen korrespondierend verlaufen; sowie
- die Außenhülse (6) und die elastische Schicht (7) in Bezug auf die Senkrechte X zur Längsachse Y zweiteilig ausgebildet sind, wobei die beiden Hülsenhälften (B1, B2) mittels eines Steck-Nuten-Systems (11) im Pressverbund zusammengefügt sind, während die beiden elastischen Schichthälften (C1, C2) in einem Abstand L1 zueinander angeordnet sind.

3. Buchse nach Anspruch 2, **dadurch gekennzeichnet, dass** die beiden Nabenhälften (A3, A4) aneinander stoßen.

4. Buchse nach Anspruch 2, **dadurch gekennzeichnet, dass** die beiden Nabenhälften (A5, A6) in einem Abstand L3 zueinander angeordnet sind.

5. Buchse nach Anspruch 4, **dadurch gekennzeichnet, dass** der durchgehend verlaufende Kernbolzen (4") innerhalb seines mittigen Bereiches verdickt ist, wobei der Überstand (15) der Bolzenverdickung (14) gleichzeitig der Anschlag (16) für die in einem Abstand L3 zueinander angeordneten Nabenhälften (A5, A6) ist.

6. Buchse nach Anspruch 4 oder 5, **dadurch gekennzeichnet, dass** der Abstand L3 zwischen den beiden Nabenhälften (A5, A6) kleiner ist als der Abstand L1 zwischen den beiden elastischen Schichthälften (C1, C2).

7. Buchse nach einem der Ansprüche 1 bis 6, **dadurch gekennzeichnet, dass** die elastische Schicht (7) aus einem elastomeren Werkstoff oder einem thermoplastischen Elastomeren besteht.

8. Buchse nach einem der Ansprüche 1 bis 6, **dadurch gekennzeichnet, dass** die elastische Schicht (7) eine Schichtfeder ist, gebildet aus wenigstens zwei Schichten aus einem elastomeren oder einem thermoplastischen Elastomeren und wenigstens einer Schicht aus Metall oder Kunststoff.

9. Buchse nach Anspruch 7 oder 8, **dadurch gekennzeichnet, dass** der elastomere Werkstoff auf Basis Naturkautschuk besteht.

10. Buchse nach einem der Ansprüche 1 bis 9, **dadurch gekennzeichnet, dass** die Stärke S der elastischen Schicht (7) im Wesentlichen konstant ist.

11. Buchse nach einem der Ansprüche 1 bis 10, **dadurch gekennzeichnet, dass** die Stärke S der elastischen Schicht (7) 3 mm bis 30 mm, vorzugsweise 10 mm bis 20 mm, beträgt, und zwar bezogen auf den unbelasteten Zustand.

12. Buchse nach einem der Ansprüche 1 bis 11, **dadurch gekennzeichnet, dass** der Winkel α der Nabenverjüngung 2° bis 80°, vorzugsweise 30° bis 60°, beträgt, und zwar bezogen auf die Längsachse Y.

13. Buchse nach einem der Ansprüche 1 bis 12, **dadurch gekennzeichnet, dass** der Abstand L1 zwischen den beiden elastischen Schichthälften (C1, C2) etwa den gesamten mittigen Nabenbereich mit dem dritten Durchmesser D3 umfasst.

14. Buchse nach einem der Ansprüche 1 bis 13, **dadurch gekennzeichnet, dass** das Verhältnis des ersten und zweiten Durchmessers D1 bzw. D2, die gleich oder verschieden sein können, zum dritten Durchmesser D3 folgenden Wertebereich umfasst:
D1 bzw. D2 : D3 = 3 : 1 bis 1,5 :1, vorzugsweise 2,5 : 1 bis 2 : 1

15. Buchse nach einem der Ansprüche 1 bis 14, **dadurch gekennzeichnet, dass** das Verhältnis der Gesamtlänge L der Außenhülse (6) zum Abstand L1 zwischen den beiden elastischen Schichthälften (C1, C2) folgenden Wertebereich umfasst:
L : L1 = 3 : 1 bis 10 : 1, vorzugsweise 5 : 1 bis 10 : 1

16. Buchse nach einem der Ansprüche 1 bis 15, **dadurch gekennzeichnet, dass** die Gesamtlänge L2 der elastischen Schicht (7) unter Einbezug des Abstandes L1 zwischen den beiden Schichthälften (C1, C2) kleiner ist als die Gesamtlänge L der Außenhülse (6).

17. Buchse nach einem der Ansprüche 1 bis 16, **dadurch gekennzeichnet, dass** das Verhältnis der Gesamtlänge L und des Außendurchmessers D der Außenhülse (6) folgenden Wertebereich umfasst:
L : D = 1 : 2 bis 2: 1, vorzugsweise 1,5 : 1

## Claims

1. Bush (1), in particular rod bush, consisting at least of:
- a core made of metal or plastic, comprising a core hub (2) which exhibits two ends (3) with a first and a second diameter D1 and D2 respectively, and a core pin (4) which runs in the direction of the longitudinal axis Y and projects beyond the two ends of the core hub forming two connecting journals (5),
- an external sleeve (6) which is also made of metal or plastic, and
- an elastic layer (7) which is arranged between the core hub (2) and the external sleeve (6),
**characterised in that**
- the core hub (2) and the core pin (4) form a one-piece core assembly which however is formed in two parts in relation to the perpendicular X to the longitudinal axis Y, with the two core halves (A1, A2) being joined together by means of a male and female coupling system (8) with a press fit,
- the core hub (2) tapers between its two ends (3) with a change of angle α, forming a third diameter D3, with the respective contact faces (9, 10) of the core hub and the external sleeve (6) with the elastic layer (7) running essentially correspondingly, and
- the external sleeve (6) and the elastic layer (7) are formed in two parts in relation to the perpendicular X to the longitudinal axis Y, with the two sleeve halves (B1, B2) being joined together by means of a male and female coupling system (11) with a press fit, while the two elastic layer halves (C1, C2) are arranged a distance L1 from one another.

2. Bush (1', 1"), in particular rod bush, consisting at least of:
- a core made of metal or plastic, comprising a core hub (2', 2") which exhibits two ends (3) with a first and a second diameter D1 and D2 respectively, and a core pin (4', 4"), which runs in the direction of the longitudinal axis Y and projects beyond the two ends of the core hub forming two connecting journals (5),
- an external sleeve (6) which is also made of metal or plastic, and
- an elastic layer (7) which is arranged between the core hub (2', 2") and the external sleeve (6),
**characterised in that**
- the core hub (2', 2") and the core pin (4', 4") are separate components, with the core hub being formed in two parts in relation to the perpendicular X to the longitudinal axis Y, while the core pin runs continuously undivided, with the two hub halves (A3, A4; A5, A6) forming a press fit with the core pin within the common hub and pin contact zone (12),
- the core hub (2', 2") tapers between its two ends (3) with a change of angle α, forming a third diameter D3, with the respective contact faces (9, 10) of the core hub and the external sleeve (6) with the elastic layer (7) running essentially correspondingly, and
- the external sleeve (6) and the elastic layer (7) are formed in two parts in relation to the perpendicular X to the longitudinal axis Y, with the two sleeve halves (B1, B2) being joined together by means of a male and female coupling system (11) with a press fit, while the two elastic layer halves (C1, C2) are arranged a distance L1 from one another.

3. Bush according to claim 2, **characterised in that** the two hub halves (A3, A4) abut one another.

4. Bush according to claim 2, **characterised in that** the two hub halves (A5, A6) are arranged a distance L3 from one another.

5. Bush according to claim 4, **characterised in that** the core pin (4") which runs continuously is thicker within its middle area, with the protrusion (15) of the pin thickening (14) simultaneously forming the stop (16) for the hub halves (A5, A6) arranged a distance L3 from one another.

6. Bush according to claim 4 or 5, **characterising in that** the distance L3 between the two hub halves (A5, A6) is smaller than the distance L1 between the two elastic layer halves (C1, C2).

7. Bush according to one of claims 1 to 6, **characterised in that** the elastic layer (7) is made of an elastomer material or a thermoplastic elastomer.

8. Bush according to one of claims 1 to 6, **characterised in that** the elastic layer (7) is a laminated spring formed of at least two layers of an elastomer or a thermoplastic elastomer and at least one layer of metal or plastic.

9. Bush according to claim 7 or 8, **characterised in that** the elastomer material is based on natural rubber.

10. Bush according to one of claims 1 to 9, **characterised in that** the thickness S of the elastic layer (7) is essentially constant.

11. Bush according to one of claims 1 to 10, **characterised in that** the thickness S of the elastic layer (7) is 3 mm to 30 mm, preferably 10 mm to 20 mm, related to the unladen state.

12. Bush according to one of claims 1 to 11, **characterised in that** the angle α of the hub taper is 2° to 80°, preferably 30° to 60°, related to the longitudinal axis Y.

13. Bush according to one of claims 1 to 12, **characterised in that** the distance L1 between the two elastic layer halves (C1, C2) roughly embraces the entire middle hub area with the third diameter D3.

14. Bush according to one of claims 1 to 13, **characterised in that** the ratio of the first and second diameters D1 and D2, which can be the same or different, to the third diameter D3 embraces the following value range:
D1 or D2:D3 = 3:1 to 1.5:1, preferably 2.5:1 to 2:1

15. Bush according to one of claims 1 to 14, **characterised in that** the ratio of the overall length L of the external sleeve (6) to the distance L1 between the two elastic layer halves (C1, C2) embraces the following value range:
L:L1 = 3:1 to 10:1, preferably 5:1 to 10:1

16. Bush according to one of claims 1 to 15, **characterised in that** the overall length L2 of the elastic layer (7) including the distance L1 between the two layer halves (C1, C2) is smaller than the overall length L of the external sleeve (6).

17. Bush according to one of claims 1 to 16, **characterised in that** the ratio of the overall length L and the outside diameter D of the external sleeve (6) embraces the following value range:
L:D = 1:2 to 2:1, preferably 1.5:1

## Revendications

1. Douille (1), en particulier douille de guidage, se composant au moins de ce qui suit :
- un coeur en métal ou en plastique, comprenant un moyeu de coeur (2) qui présente deux faces frontales (3) avec un premier et un deuxième diamètre D1 ou D2, et un boulon de coeur (4) évoluant dans le sens de l'axe longitudinal Y qui dépasse des deux faces frontales du moyeu de coeur en formant deux pivots dé raccord (5) ;
- un manchon extérieur (6) qui est également composé de métal ou de plastique ; ainsi que
- une couche élastique (7) qui est disposée entre le moyeu de coeur (2) et le manchon extérieur (6) ;
**caractérisée en ce que**
- le moyeu de coeur (2) et le boulon de coeur (4) forment un assemblage de coeur d'une seule pièce qui est cependant réalisé en deux parties par rapport à la perpendiculaire X à l'axe longitudinal Y, les deux moitiés de coeur (A1, A2) étant assemblées par liaison par pression au moyen d'un système fiche/encoches (8) ;
- le moyeu de coeur (2) subit un rétrécissement entre ses deux faces frontales (3) selon une modification angulaire α, c'est-à-dire en formant un troisième diamètre D3, les surfaces de contact respectives (9, 10) du moyeu de coeur et du manchon extérieur (6) évoluant pour l'essentiel en correspondance avec la couche élastique (7); ainsi que
- le manchon extérieur (6) et la couche élastique (7) sont réalisés en deux parties par rapport à la perpendiculaire X à l'axe longitudinal Y, les deux moitiés de manchon (B1, B2) étant assemblées par une liaison par pression au moyen d'un système fiche/encoches (11), tandis que les deux moitiés de couche élastique (C1, C2) sont disposées avec un écartement L1 l'une par rapport à l'autre.

2. Douille (1', 1''), en particulier douille de guidage, se composant au moins de ce qui suit :
- un coeur en métal ou en plastique, comprenant un moyeu de coeur (2', 2'') qui présente deux faces frontales (3) avec un premier et un deuxième diamètre, respectivement D1 et D2, et un boulon de coeur (4', 4") évoluant dans le sens de l'axe longitudinal Y qui dépasse des deux faces frontales du moyeu de coeur en formant deux pivots de raccord (5) ;
- un manchon extérieur (6) qui est également composé de métal ou de plastique ; ainsi que
- une couche élastique (7) qui est disposée entre le moyeu de coeur (2', 2") et le manchon extérieur (6) ;
**caractérisée en ce que**
- le moyeu de coeur (2', 2'') et le boulon de coeur (4', 4'') sont des composants séparés, le moyeu de coeur étant réalisé en deux parties par rapport à la perpendiculaire X à l'axe longitudinal Y, tandis que le boulon de coeur évolue d'une seule pièce en continu, les deux moitiés de moyeu (A3, A4 ; A5, A6) formant un assemblage pressé avec le boulon de coeur à l'intérieur de la zone de contact commune moyeu/boulon (12) ;
- le moyeu de coeur (2', 2'') subit un rétrécissement entre ses deux faces frontales (3) selon une modification angulaire α, c'est-à-dire en formant un troisième diamètre D3, les surfaces de contact respectives (9, 10) du moyeu de coeur et du manchon extérieur (6) avec la couche élastique (7) évoluant pour l'essentiel en correspondance ; ainsi que
- le manchon extérieur (6) et la couche élastique (7) sont réalisés en deux parties par rapport à la perpendiculaire X à l'axe longitudinal Y, les deux moitiés de manchon (B1, B2) étant assemblées par une liaison par pression au moyen d'un système fiche/encoche (11), tandis que les deux moitiés de couche élastique (C1, C2) sont disposées avec un écartement L1 l'une par rapport à l'autre.

3. Douille selon la revendication 2, **caractérisée en ce que** les deux moitiés de moyeu (A3, A4) se touchent.

4. Douille selon la revendication 2, **caractérisée en ce que** les deux moitiés de moyeu (A5, A6) sont disposées avec un écartement L3 l'une par rapport à l'autre.

5. Douille selon la revendication 4, **caractérisée en ce que** le boulon de coeur (4'') évoluant en continu est épaissi à l'intérieur de sa zone centrale, la saillie (15) de l'épaississement de boulon (14) étant en même temps la butée (16) pour les moitiés de moyeu (A5, A6) disposées avec un écartement L3 l'une par rapport à l'autre.

6. Douille selon la revendication 4 ou 5, **caractérisée en ce que** l'écartement L3 entre les deux moitiés de moyeu (A5, A6) est inférieur à l'écartement L1 entre les deux moitiés de couche élastique (C1, C2).

7. Douille selon l'une quelconque des revendications 1 à 6, **caractérisée en ce que** la couche élastique (7) est composée d'un matériau élastomère ou d'un élastomère thermoplastique.

8. Douille selon l'une quelconque des revendications 1 à 6, **caractérisée en ce que** la couche élastique (7) est une languette stratifiée, formée d'au moins deux couches composées d'un matériau élastomère ou d'un élastomère thermoplastique et d'au moins une couche en métal ou en plastique.

9. Douille selon la revendication 7 ou 8, **caractérisée en ce que** le matériau élastomère se compose d'une base de caoutchouc naturel.

10. Douille selon l'une quelconque des revendications 1 à 9, **caractérisée en ce que** l'épaisseur S de la couche élastique (7) est pour l'essentiel constante.

11. Douille selon l'une quelconque des revendications 1 à 10, **caractérisée en ce que** l'épaisseur S de la couche élastique (7) est comprise entre 3 mm et 30 mm, de préférence entre 10 mm et 20 mm, c'est-à-dire par rapport à l'état non chargé.

12. Douille selon l'une quelconque des revendications 1 à 11, **caractérisée en ce que** l'angle α du rétrécissement de moyeu est compris entre 2° et 80°, de préférence entre 30° et 60°, c'est-à-dire par rapport à l'axe longitudinal Y.

13. Douille selon l'une quelconque des revendications 1 à 12, **caractérisée en ce que** l'écartement L1 entre les deux moitiés de couche élastique (C1, C2) englobe à peu près la totalité de la zone de moyeu centrale avec le troisième diamètre D3.

14. Douille selon l'une quelconque des revendications 1 à 13, **caractérisée en ce que** la proportion du premier et du deuxième diamètre, respectivement D1 et D2, qui peuvent être égaux ou différents, par rapport au troisième diamètre D3 comprend le domaine de valeurs suivant :
D1 ou D2 : D3 = 3 : 1 à 1,5 : 1, de préférence 2,5 : 1 à 2 : 1

15. Douille selon l'une quelconque des revendications 1 à 14, **caractérisée en ce que** la proportion de la longueur totale L du manchon extérieur (6) par rapport à l'écartement L1 entre les deux moitiés de couche élastique (C1, C2) comprend le domaine de valeurs suivant :
L : L1 = 3 : 1 à 10 : 1, de préférence 5 : 1 à 10 : 1

16. Douille selon l'une quelconque des revendications 1 à 15, **caractérisée en ce que** la longueur totale L2 de la couche élastique (7) en incluant l'écartement L1 entre les deux moitiés de couche (C1, C2) est inférieure à la longueur totale L du manchon extérieur (6).

17. Douille selon l'une quelconque des revendications 1 à 16, **caractérisée en ce que** la proportion de la longueur totale L et du diamètre extérieur D du manchon extérieur (6) comprend le domaine de valeurs suivant :
L : D = 1 : 2 à 2 : 1, de préférence 1,5 : 1
